# EUROPÄISCHE PATENTANMELDUNG

(11) **EP 4 763 436 A1**
(43) Veröffentlichungstag der Anmeldung: **24.06.2026**
(21) Anmeldenummer: 25207384.6
(22) Anmeldetag: 08.10.2025
(51) Int. Cl.: B25J 9/16, B25J 19/02

(54) **ROBOTERSYSTEM ZUR BENUTZERFÜHRUNG**

(30) Priorität: 19.12.2024 DE 102024139067
(71) Anmelder: SICK AG, 79183 Waldkirch (DE)
(72) Erfinder: ERLEWEIN, Patrick, 79279 Vörstetten (DE); FRANZ, Max, 79254 Oberried (DE)
(74) Vertreter: Manitz Finsterwald Patent- und Rechtsanwaltspartnerschaft mbB

(57) **Zusammenfassung**

Ein Robotersystem umfasst einen Roboter, der einen Arm mit einer an dessen Ende angeordneten Arbeitseinheit aufweist, eine um den Arm herum angeordnete Sensoreinheit zum insbesondere optischen Erfassen einer Ist-Arbeitsposition eines Benutzers in einem eine Ist-Position der Arbeitseinheit umgebenden Arbeitsbereich, eine um den Arm herum angeordnete Anzeigeeinheit zum Anzeigen einer Soll-Arbeitsposition des Benutzers in dem Arbeitsbereich und eine mit der Sensoreinheit und der Anzeigeeinheit in Signalverbindung stehende Steuereinheit zum Ansteuern der Anzeigeeinheit basierend auf der Ist-Position der Arbeitseinheit und/oder der erfassten Ist-Arbeitsposition.

## Beschreibung

Die Erfindung betrifft ein Robotersystem mit einem Roboter, einer Sensoreinheit, einer Anzeigeeinheit und einer Steuereinheit.

Robotersysteme zur Benutzerführung werden für Verfahren genutzt, bei denen Benutzer, also Menschen, mit Robotern interagieren. Derartige Verfahren werden nachfolgend auch als "Interaktionsverfahren" bezeichnet. Das Ergebnis solcher Interaktionsverfahren kann grundsätzlich dadurch verbessert werden, dass der Benutzer entsprechend angewiesen wird, wo, wie und wann genau er mit dem Robotersystem interagieren soll. Dadurch können Fehler des Benutzers, die die Qualität des Ergebnisses des Interaktionsverfahrens beeinflussen können, vermieden oder verringert werden. Denkbar ist etwa, dass hierzu auf einem Bildschirm ein Bild oder eine Videosequenz gezeigt wird, durch die der Benutzer angeleitet werden kann. Um die Arbeiten des Benutzers nicht zu behindern, sind derartige Bildschirme außerhalb des Arbeitsbereichs des Benutzers und des Roboters, in dem die Interaktion stattfindet, angeordnet.

Robotersysteme zur Benutzerführung sind üblicherweise komplex, teuer und können Arbeitsschritte des Benutzers allenfalls erst nachgelagert auf Richtigkeit prüfen. Zudem sind derartige Systeme in der Regel stationär außerhalb des Arbeitsbereichs angeordnet. Daher können Robotersysteme nicht direkt auf Fehler des Benutzers reagieren.

Die vorliegende Erfindung beruht auf der Aufgabe, ein Robotersystem bereitzustellen, welches eine verbesserte Benutzerführung ermöglicht.

Diese Aufgabe wird durch ein Robotersystem mit den Merkmalen des Anspruchs 1 gelöst. Vorteilhafte Weiterbildungen sind Gegenstand der abhängigen Ansprüche und ergeben sich aus der Beschreibung und den Zeichnungen.

Das erfindungsgemäße Robotersystem umfasst einen Roboter, der einen Arm mit einer an dessen Ende angeordneten Arbeitseinheit aufweist, eine um den Arm herum, insbesondere ringförmig angeordnete Sensoreinheit zum insbesondere optischen Erfassen einer Ist-Arbeitsposition eines Benutzers in einem eine Ist-Position der Arbeitseinheit umgebenden Arbeitsbereich, eine um den Arm herum, insbesondere ringförmig angeordnete Anzeigeeinheit zum Anzeigen einer Soll-Arbeitsposition des Benutzers in dem Arbeitsbereich und eine mit der Sensoreinheit und der Anzeigeeinheit in Signalverbindung stehende Steuereinheit zum Ansteuern der Anzeigeeinheit basierend auf der Ist-Position der Arbeitseinheit und/oder der erfassten Ist-Arbeitsposition.

Als "Roboter" wird dabei ein Gerät verstanden, das unter Zuhilfenahme des beweglichen Arms mit der Arbeitseinheit bestimmte Tätigkeiten mechanischer Art verrichtet. Abhängig davon, wie die Arbeitseinheit im Einzelfall konkret ausgestaltet ist, können durch sie beispielsweise Gegenstände aufgenommen und abgelegt werden. Aber auch Tätigkeiten wie beispielsweise schweißen, schrauben, nieten, kleben oder lackieren können durchgeführt werden.

Die Sensoreinheit und die Anzeigeeinheit sind insbesondere jeweils ringförmig um den beweglichen Arm des Roboters angeordnet, werden also mit diesem mitbewegt. Ringförmig kann dabei einen in Umfangsrichtung geschlossenen oder offenen Ring meinen. Die Ringform kann zudem rund sein, allerdings werden unter "ringförmig" grundsätzlich auch eckige Ausgestaltungen verstanden. Die Sensoreinheit und die Anzeigeeinheit können sich beispielhaft ein Gehäuse teilen, also eine verbundene Einheit sein. Denkbar ist aber auch, dass Sensoreinheit und Anzeigeeinheit zwei auch gegenständlich getrennte Einheiten sind.

Die Sensoreinheit kann etwa Abstandssensoren für die Erfassung der Ist-Arbeitsposition in dem Arbeitsbereich aufweisen. Die Sensoreinheit erfasst ein Eingreifen in den Arbeitsbereich, wobei der Arbeitsbereich von den Abstandssensoren aufgespannt oder abgedeckt wird, das heißt der Arbeitsbereich wird von den Abstandssensoren vorzugsweise vollständig erfasst.

Als Abstandssensoren können Sensoren verwendet werden, welche einen Einzeldistanzwert erzeugen, oder auch Mehrfachsensoren, welche Distanzwerte mehrerer benachbarter Messpunkte erzeugen. Im Falle eines optischen Messprinzips können insbesondere sogenannte SPAD (Single-Photon-Avalanche-Dioden) als Sensoren verwendet werden.

Die Sensoreinheit kann die Ist-Arbeitsposition beispielsweise optisch erfassen, also etwa mittels der oben angesprochenen SPAD oder einer Kamera. Denkbar sind auch ein elektromagnetisches Erfassen, beispielsweise mittels Radar, oder die Verwendung eines akustischen Messprinzips, etwa Ultraschall.

Durch die von der Sensoreinheit erfasste Ist-Arbeitsposition ist es ergänzend möglich, festzustellen, wenn der Benutzer oder ein anderes Hindernis der Arbeitseinheit zu nahe kommt, also etwa einen vorbestimmten Sicherheitsabstand zu der Arbeitseinheit unterschreitet. Zu diesem Zweck kann ein Schutzvolumen um die Arbeitseinheit definiert sein, das sich von dem Arbeitsbereich unterscheiden kann und den Sicherheitsabstand in alle Richtungen definiert. Sowohl die Form als auch die Abmessungen des Schutzvolumens können beispielsweise in Abhängigkeit von der Bewegungsgeschwindigkeit der Arbeitseinheit oder von deren Position variieren oder auch durch Einstellen der Steuereinheit veränderbar oder programmierbar sein. Sobald die Steuereinheit feststellt, dass der Benutzer oder ein Hindernis in das Schutzvolumen eindringt, kann eine Sicherheitsreaktion ausgelöst werden, die die Bewegung der Arbeitseinheit verlangsamt oder stoppt und/oder die Tätigkeit der Arbeitseinheit anhält.

Der die Arbeitseinheit umgebende Arbeitsbereich umfasst insbesondere einen Bereich, in welchem die Arbeitseinheit und/oder der Benutzer planmäßig Tätigkeiten durchführen. Die Größe des Arbeitsbereichs ist dabei von der jeweiligen Anwendung des Roboters abhängig.

Die Soll-Arbeitsposition bezeichnet grundsätzlich die gewünschte Arbeitsposition des Benutzers, also den genauen Ort innerhalb des Arbeitsbereichs, an dem der Benutzer eine bestimmte Tätigkeit zum Interagieren mit dem Roboter bzw. dessen Arbeitseinheit vornehmen soll.

Die Steuereinheit wertet Erfassungsdaten der Sensoreinheit bezüglich der Ist-Arbeitsposition des Benutzers aus und steuert die Anzeigeeinheit auf Grundlage dieser Erfassungsdaten an. So kann die Steuereinheit die Anzeigeeinheit etwa ansteuern, damit diese eine Soll-Arbeitsposition für den Benutzer in dem Arbeitsbereich anzeigt, etwa dann, wenn die Ist-Arbeitsposition von dieser abweicht, oder wenn der Benutzer die Ist-Arbeitsposition im nächsten Schritt verändern soll. Denkbar ist auch, dass die Anzeigeeinheit in gewissen Situationen keine Soll-Arbeitsposition in dem Arbeitsbereich anzeigt, und zwar beispielsweise, wenn die Ist-Arbeitsposition bereits mit der Soll-Arbeitsposition übereinstimmt.

Der Benutzer erhält somit durch die Anzeige in dem Arbeitsbereich direkte Anweisungen, um das Interaktionsverfahren mit seinen Arbeitsschritten ideal durchzuführen. Dadurch erhält der Benutzer eine unmittelbare Rückmeldung zu seiner Interaktion mit dem Roboter, und zwar unmittelbar in zeitlicher und örtlicher Hinsicht. Denn die Rückmeldung durch die Anzeige erfolgt direkt während des Interaktionsverfahren, sodass der Benutzer "live" geführt wird. Zudem werden die Anweisungen direkt in dem Arbeitsbereich angezeigt, sodass der Benutzer nicht etwa auf einen separaten Bildschirm schauen muss, der außerhalb des Arbeitsbereichs angeordnet ist. Dadurch ergibt sich eine verbesserte Benutzerführung, da das System direkt mit dem Benutzer interagiert und der Benutzer sich nicht beim gedanklichen Umschalten von einem Bildschirm zum Arbeitsbereich neuorientieren muss. Des Weiteren können zusätzliche Komponenten, wie etwa der separate Bildschirm, Statusanzeigen oder eine HMI ("Human Machine Interface") eingespart werden.

Vorzugsweise ist die Steuereinheit ausgebildet, zu überwachen, dass der Benutzer aufeinanderfolgende Arbeitsschritte eines Interaktionsverfahrens, bei dem der Benutzer mit der Arbeitseinheit des Roboters interagiert, korrekt ausführt, und den Benutzer durch Ansteuern der Anzeigeeinheit zum Anzeigen der jeweiligen Soll-Arbeitsposition durch das Interaktionsverfahren zu führen.

Dadurch ist es möglich, dass der Benutzer nicht nur durch einzelne Arbeitsschritte, sondern durch das ganze Interaktionsverfahren geführt wird. Dazu kennt die Steuereinheit mehrere oder gar alle Arbeitsschritte des Interaktionsverfahrens und kann den Benutzer jeweils zur korrekten Anleitung des jeweils aktuell durchzuführenden Arbeitsschritts anleiten. Nach Abschluss des Arbeitsschritts kann die Steuereinheit zum nächsten Arbeitsschritt umgeschaltet werden und dementsprechend den Benutzer hierzu anleiten.

Die Steuereinheit kennt somit die jeweiligen Arbeitsschritte, die jeweils mindestens eine durch Position, Geschwindigkeit oder Zeit definierte (Soll-)Handlung des Benutzers umfassen. So kann ein Arbeitsschritt rein beispielhaft dadurch definiert sein, dass der Benutzer seine Hand an einen bestimmten Ort im Arbeitsbereich bewegen und dort einen Gegenstand ablegen soll, an dem dann mittels der Arbeitseinheit Tätigkeiten vorgenommen werden.

Die Steuereinheit kann innerhalb dieser Arbeitsschritte die durch Auswertung der Erfassungsdaten bekannte Ist-Arbeitsposition des Benutzers und/oder deren zeitliche Veränderung, also die Bewegungsgeschwindigkeit, mit dem der Steuereinheit bekannten Soll ab und steuert gegebenenfalls die Anzeigeeinheit an, um dem Benutzer das korrekte Durchführen des jeweiligen Arbeitsschritts anzuzeigen.

Das korrekte Durchführen des Arbeitsschritts schließt etwa die Position, aber auch die Reihenfolge oder die zeitliche Dauer der Arbeitsschritte ein. Beispielsweise kann insbesondere die korrekte Dauer beim Kleben wichtig sein.

Die Steuereinheit kann ausgebildet sein, aufgrund einer erfassten Ist-Arbeitsposition und/oder aufgrund einer erfassten zeitlichen Änderung der Ist-Arbeitsposition festzustellen, dass ein Arbeitsschritt des Interaktionsverfahrens abgeschlossen ist. Wenn die Steuereinheit feststellt, dass der Arbeitsschritt abgeschlossen ist, kann die Steuereinheit automatisch, also durch eigene Erkennung, zum nächsten Arbeitsschritt umschalten oder, wenn der abgeschlossene Arbeitsschritt der letzte Arbeitsschritt des Interaktionsverfahrens war, das Interaktionsverfahren beenden. So kann die Steuereinheit vollautomatisch, Schritt-für-Schritt und in der korrekten Reihenfolge durch das Interaktionsverfahren führen. Das Robotersystem kann dann insgesamt die korrekte Reihenfolge der Arbeitsschritte und innerhalb der Arbeitsschritte die jeweils korrekte Durchführung überwachen. Arbeitsschritte können dadurch nicht vergessen werden. Auch wenn ein Arbeitsschritt falsch durchgeführt wird, kann verhindert werden, dass dennoch zum nächsten Arbeitsschritt übergegangen wird. Dies erhöht die Qualität der Arbeitsergebnisse des Interaktionsverfahrens.

Vorzugsweise ist die Soll-Arbeitsposition eine aktuelle oder eine zukünftige Soll-Arbeitsposition. Wenn die Anzeigeeinheit dem Benutzer die Soll-Arbeitsposition anzeigt, bedeutet dies also entweder eine derzeit falsche Ist-Arbeitsposition des Benutzers oder dass der Benutzer die Ist-Arbeitsposition für die nächste Tätigkeit verändern soll. Denkbar ist aber auch, dass die Anzeigeeinheit dem Benutzer sowohl die aktuelle als auch die zukünftige Soll-Arbeitsposition anzeigt, etwa in unterschiedlichen Farben. Dies hat für den Benutzer den Vorteil, dass er sich bereits vorab darauf einstellen kann, dass sich die Soll-Arbeitsposition bald ändert. Zugleich bekommt der Benutzer aber auch noch die aktuelle Soll-Arbeitsposition angezeigt.

Insbesondere ist die Steuereinheit ausgebildet, die Anzeigeeinheit zum Anzeigen der Soll-Arbeitsposition anzusteuern, wenn die Ist-Arbeitsposition von der Soll-Arbeitsposition abweicht. Dadurch bekommt der Benutzer angezeigt, dass eine Korrektur erforderlich ist.

Vorzugsweise weist die Sensoreinheit eine Vielzahl von Abstandssensoren zum Erfassen des Arbeitsbereichs auf. Die Abstandssensoren der um den Arm herum angeordneten Sensoreinheit sind dann insbesondere ringförmig um den Arm des Roboters herum angeordnet. Die Abstandssensoren können entlang eines Umfangs der Sensoreinheit insbesondere mit gleichen Abständen zueinander angeordnet sein. Indem Sie den Abstand zu einem Erfassungsobjekt (Benutzer) im Arbeitsbereich erfassen, kann die genaue Position in zwei Richtungen ermittelt werden, nämlich durch den erfassten Abstand und durch den Abstandssensor, welcher den Abstand erfasst hat. Die von benachbarten Abstandssensoren erfassten Teilbereiche des Arbeitsbereichs können teilweise überlappen, sodass sichergestellt ist, dass der Arbeitsbereich vollständig von den Abstandssensoren erfasst wird. Zudem kann in den überlappenden Bereichen eine Redundanz der Abstandssensoren erzielt werden.

Die Steuereinheit kann ausgebildet sein, die Anzeigeeinheit zum Ankündigen einer nachfolgenden Bewegungsrichtung des Roboters anzusteuern. Dadurch wird dem Benutzer mitgeteilt, wo sich der Roboter, also insbesondere der Arm mit der Arbeitseinheit, demnächst hinbewegen wird. Dadurch können für den Benutzer überraschende Situationen vermieden werden. Etwa kann durch die Farbe des Lichts dem Benutzer mitgeteilt werden, dass das Licht eine zukünftige Bewegung des Roboters anzeigt.

Vorzugsweise ist die Anzeigeeinheit eine räumlich aufgelöste Anzeige und weist insbesondere eine Vielzahl von individuell ansteuerbaren LEDs auf. Gemäß einer Ausgestaltung kann die Anzeigeeinheit mehrere, insbesondere parallel zueinander angeordnete, Anzeigeelemente aufweisen, die zur Anzeige an unterschiedlichen Positionen in einer Erstreckungsrichtung des Arms zueinander beabstandet sind. Dadurch kann etwa die Soll-Arbeitsposition in unterschiedlichen Höhen angezeigt werden. Die Anzeigeelemente können als Ringanzeigen ausgebildet sein, die parallel und/oder konzentrisch zueinander jeweils um den Arm des Roboters verlaufen.

Die Anzeigeeinheit kann zur Anzeige in unterschiedlichen Farben ausgebildet sein, wobei den Farben unterschiedliche Anzeigeformen wie Warnungen oder Ankündigen zugeordnet sind. Zum Beispiel kann die Anzeigeeinheit anzeigen, dass derzeit gewartet werden muss und der Arbeitsschritt noch nicht beendet ist, dass ein Problem vorhanden ist oder dass sich der Benutzer für den nächsten Arbeitsschritt bzw. die nächste Bewegung des Roboters bereitmachen soll. Diese Anzeigeformen können insbesondere durch unterschiedliche Farben dem Benutzer signalisiert werden, das heißt jeder Anzeigeform ist eine andere Farbe zugeordnet. Denkbar ist etwa auch, dass bestimmte Anzeigeformen durch eine blinkende, also unterbrochene Anzeige unterschieden werden.

Nachfolgend wird die Erfindung anhand eines in Zeichnungen gezeigten Ausführungsbeispiels rein beispielhaft und schematisch erläutert. Dabei zeigt:
- Fig. 1: eine Seitenansicht eines Endabschnitts eines Roboterarms mit einer Arbeitseinheit, einer Sensoreinheit und einer Anzeigeeinheit und
- Fig. 2: eine Draufsicht auf eine Sensoreinheit gemäß dem Ausführungsbeispiel aus Fig. 1.

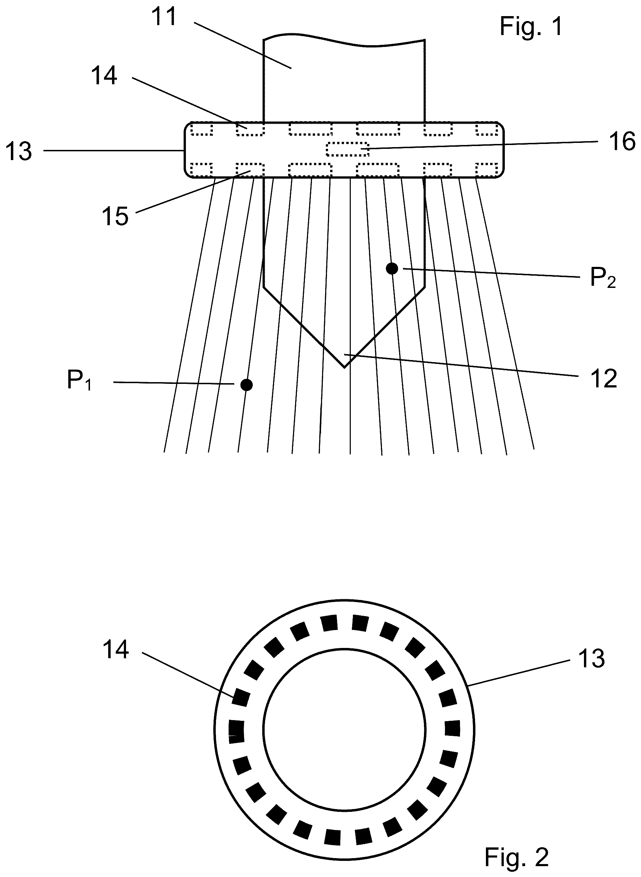

Fig. 1 zeigt einen Abschnitt eines Arms 11 eines Roboters. Am Ende des Arms 11 ist eine Arbeitseinheit 12 angeordnet, die hier lediglich schematisch durch ein spitz zulaufendes Ende angedeutet ist. Als Arbeitseinheit 12 kann grundsätzlich alles fungieren, womit der Roboter Tätigkeiten mechanischer Art ausführen kann. In Abhängigkeit von der Arbeitseinheit 12 kann der Roboter damit beispielsweise Gegenstände aufnehmen und ablegen, schweißen, schrauben, nieten, kleben oder lackieren. Es ist auch denkbar, dass die Arbeitseinheit 12 austauschbar ist, also an wechselnde Tätigkeiten angepasst werden kann.

An dem Arm 11 ist ein den Arm 11 ringförmig umgebendes Gehäuse 13 angeordnet, das eine Sensoreinheit 14, eine Anzeigeeinheit 15 und eine mit der Sensoreinheit 14 und der Anzeigeeinheit 15 in Signalverbindung stehende Steuereinheit 16 beherbergt. Wenngleich sich im vorliegenden Ausführungsbeispiel die Sensoreinheit 14, die Anzeigeeinheit 15 und die Steuereinheit 16 das gemeinsame Gehäuse 13 teilen, ist dies keineswegs notwendig. Die Einheiten 14, 15, 16 können vielmehr auch unterschiedlich untergebracht sein, beispielsweise jeweils eigene Gehäuse aufweisen.

Die Sensoreinheit 14 besteht aus einer Vielzahl von entlang einer Kreisbahn angeordneten Abstandssensoren, wie in Fig. 1 und 2 gezeigt ist. Die Abstandssensoren sind im vorliegenden Ausführungsbeispiel in periodischer Anordnung entlang der Kreisbahn verteilt. Die Abstandssensoren sind zudem zum freien Ende des Arms 11 hin ausgerichtet, sodass sie einen die Arbeitseinheit 12 umgebenden Arbeitsbereich erfassen. Diese Ausgestaltung ermöglicht es, dass die Position eines von einem Abstandssensor erfassten Objekts, rein beispielhaft als P₁ in Fig. 1 gezeigt, in zwei Richtungen bestimmt werden kann, nämlich zum einen durch Zuordnung zu demjenigen Abstandssensor, welcher das Objekt erfasst hat, und zum anderen durch den erfassten Abstand.

Die Anzeigeeinheit 15 besteht aus einer Vielzahl von entlang einer Kreisbahn angeordneten und individuell ansteuerbaren LEDs, siehe Fig. 1. Auch die LEDs sind im vorliegenden Ausführungsbeispiel in periodischer Anordnung entlang der Kreisbahn verteilt und zum freien Ende des Arms 11 hin ausgerichtet. Die LEDs der Anzeigeeinheit 15 können daher in den die Arbeitseinheit 12 umgebenden Arbeitsbereich leuchten.

Die Steuereinheit 16 überwacht das korrekte Ausführen aufeinander folgender Arbeitsschritte eines Interaktionsverfahrens durch den Benutzer. Bei einem solchen Interaktionsverfahren interagiert der Benutzer mit der Arbeitseinheit 12 des Roboters. Dies kann bedeuten, dass der Benutzer und der Roboter mit dem Arm 11 in einer bestimmten Abfolge oder gleichzeitig bestimmte Handlungen ausführen, um dadurch gemeinsam das Ziel des Interaktionsverfahrens zu erreichen.

Die Erfindung gemäß dem vorliegenden Ausführungsbeispiel bewirkt dies dadurch, dass die Sensoreinheit 14 während eines bestimmten Arbeitsschritts des Interaktionsverfahrens eine Ist-Arbeitsposition P₁ des Benutzers mittels der Abstandssensoren erfasst. Die Ist-Arbeitsposition P₁ kann etwa eine Position sein, an der sich eine Hand des Benutzers oder ein von dem Benutzer genutztes Werkzeug befindet. Es kann zudem möglich sein, dass die Sensoreinheit 14 eine zeitliche Veränderung der Ist-Arbeitsposition P₁ erfasst, sodass sich Rückschlüsse zur Bewegungsgeschwindigkeit ergeben, also etwa der Bewegungsgeschwindigkeit der Hand oder des Werkzeugs.

Die erfassten Daten übermittelt die Sensoreinheit 14 über die Signalverbindung an die Steuereinheit 16. Die Steuereinheit 16 vergleicht die erfassten Daten betreffend die Ist-Arbeitsposition P₁ mit einer ihr bekannten Soll-Arbeitsposition P₂ für den derzeit ausgeführten Arbeitsschritt des Interaktionsverfahrens und steuert die Anzeigeeinheit 15 an, um mittels der LEDs dem Benutzer die Soll-Arbeitsposition P₂ anzuzeigen. Die LEDs zeigen daraufhin die Soll-Arbeitsposition P₂ in dem Arbeitsbereich an. Es ist grundsätzlich aber auch denkbar, dass die LEDs die Soll-Arbeitsposition P₂ nur dann in dem Arbeitsbereich anzeigen, wenn die Ist-Arbeitsposition P₁ von der Soll-Arbeitsposition P₂ abweicht, gegebenenfalls zuzüglich einer vordefinierten und der Steuereinheit 16 bekannten Toleranz.

Der Benutzer erhält durch das Licht in dem Arbeitsbereich einen in zeitlicher und örtlicher Hinsicht unmittelbaren Hinweis zur Durchführung des Interaktionsverfahrens. Der Benutzer muss seinen Blick dabei nicht von dem Arbeitsbereich abwenden. Dadurch ergibt sich eine verbesserte Benutzerführung, da das System direkt mit dem Benutzer interagiert.

Wenn ein Arbeitsschritt des Interaktionsverfahrens erfolgreich abgeschlossen ist, kann das Vorgehen für den folgenden Arbeitsschritt wiederholt werden, das heißt die Steuereinheit 16 vergleicht erneut erfasste Daten betreffend eine aktuelle Ist-Arbeitsposition mit der oder den für diesen Arbeitsschritt bekannten Soll-Arbeitsposition(en) und weist den Benutzer durch Anzeige der Soll-Arbeitsposition in dem Arbeitsbereich entsprechend an.

Das Umschalten von einem Arbeitsschritt zu einem nachfolgenden Arbeitsschritt kann dabei beispielsweise durch Betätigung durch den Benutzer erfolgen, indem dieser etwa einen dafür vorgesehenen Knopf drückt, ein Pedal betätigt oder einen Sprachbefehl spricht. Allerdings ist es auch möglich, dass die Steuereinheit 16 aufgrund der erfassten Ist-Arbeitsposition P1 oder aufgrund der erfassten zeitlichen Änderung der Ist-Arbeitsposition P1 feststellt, dass ein Arbeitsschritt des Interaktionsverfahrens abgeschlossen ist. Somit kann die Steuereinheit ohne zusätzliche Eingabe durch den Benutzer selbständig erkennen, wenn ein Arbeitsschritt erfolgreich abgeschlossen ist und dann zum nachfolgenden Arbeitsschritt umschalten.

Die Steuereinheit 16 überwacht insgesamt, ob das Interaktionsverfahren korrekt durch den Benutzer umgesetzt wird. Dies kann je nach Interaktionsverfahren etwa die richtige Reihenfolge der Arbeitsschritte des Interaktionsverfahrens, die genaue Ist-Arbeitsposition des Benutzers, die Bewegungsgeschwindigkeit des Benutzers, also die zeitliche Veränderung der Ist-Arbeitsposition, oder eine Dauer einer Bewegung oder eines Stillhaltens einschließen, etwa bei einem Klebevorgang.

Alternativ oder zusätzlich zur Anzeige der Soll-Arbeitsposition P₂ kann die Steuereinheit 16 die Anzeigeeinheit 15 ansteuern, um eine nachfolgende Soll-Arbeitsposition durch Anzeige in dem Arbeitsbereich anzukündigen, sodass sich der Benutzer schon während der Bearbeitung eines Arbeitsschritts auf die Bewegung oder Tätigkeit für den nachfolgenden Arbeitsschritt einstellen kann. Beispielsweise können die aktuelle Soll-Arbeitsposition P₂ und die angekündigte nachfolgende Soll-Arbeitsposition in unterschiedlichen Farben angezeigt werden, um auszuschließen, dass der Benutzer diese verwechselt.

Die Steuereinheit 16 kann zudem eine nachfolgende Bewegung des Roboters oder des Arms 11 ankündigen. Auch diese Ankündigung kann durch eine sich unterscheidende Farbe umgesetzt werden, um Missverständnisse beim Benutzer zu vermeiden. Das Ankündigen der Bewegung des Roboters reduziert insbesondere ungewollte Überraschungseffekte beim Benutzer.

Allgemein ist es mit den individuell ansteuerbaren LEDs möglich, durch Verwendung unterschiedlicher Farben unterschiedliche Zustände oder Informationen darzustellen. So kann etwa durch unterschiedliche Farben signalisiert werden, dass der Benutzer warten soll, da der Arbeitsschritt noch nicht beendet ist, dass ein Problem vorliegt und der Benutzer zur Lösung des Problems eingreifen muss oder dass der Benutzer sich auf den nächsten Schritt vorbereiten soll.

### Bezugszeichenliste

- 11: Arm
- 12: Arbeitseinheit
- 13: Gehäuse
- 14: Sensoreinheit
- 15: Anzeigeeinheit
- 16: Steuereinheit

- P₁: Ist-Arbeitsposition
- P₂: Soll-Arbeitsposition

## Patentansprüche

1. Robotersystem, umfassend
einen Roboter, der einen Arm (11) mit einer an dessen Ende angeordneten Arbeitseinheit (12) aufweist,
eine um den Arm (11) herum, insbesondere ringförmig, angeordnete Sensoreinheit (14) zum insbesondere optischen Erfassen einer Ist-Arbeitsposition (P₁) eines Benutzers in einem eine Ist-Position der Arbeitseinheit (12) umgebenden Arbeitsbereich,
eine um den Arm (11) herum, insbesondere ringförmig, angeordnete Anzeigeeinheit (15) zum Anzeigen einer Soll-Arbeitsposition (P₂) des Benutzers in dem Arbeitsbereich und
eine mit der Sensoreinheit (14) und der Anzeigeeinheit (15) in Signalverbindung stehende Steuereinheit (16) zum Ansteuern der Anzeigeeinheit (15) basierend auf der Ist-Position der Arbeitseinheit (12) und/oder der erfassten Ist-Arbeitsposition (P₁).

2. System nach Anspruch 1,
**dadurch gekennzeichnet, dass** die Steuereinheit (16) ausgebildet ist, das korrekte Ausführen aufeinander folgender Arbeitsschritte eines Interaktionsverfahrens, bei dem der Benutzer mit der Arbeitseinheit (12) des Roboters interagiert, durch den Benutzer zu überwachen und den Benutzer durch Ansteuern der Anzeigeeinheit (15) durch das Interaktionsverfahren zu führen.

3. System nach Anspruch 2,
**dadurch gekennzeichnet, dass** die Steuereinheit (16) ausgebildet ist, die jeweilige Soll-Arbeitsposition (P₂) der Arbeitsschritte mit der Ist-Arbeitsposition (P₁) des Benutzers abzugleichen, um das korrekte Ausführen der Arbeitsschritte zu überwachen.

4. System nach Anspruch 2 oder 3,
**dadurch gekennzeichnet, dass** die Steuereinheit (16) ausgebildet ist, aufgrund einer erfassten Ist-Arbeitsposition (P₁) und/oder aufgrund einer erfassten zeitlichen Änderung der Ist-Arbeitsposition (P₁) festzustellen, dass ein Arbeitsschritt des Interaktionsverfahrens abgeschlossen ist.

5. System nach einem der vorstehenden Ansprüche,
**dadurch gekennzeichnet, dass** die Soll-Arbeitsposition (P₂) eine aktuelle oder eine zukünftige Soll-Arbeitsposition (P₂) ist.

6. System nach einem der vorstehenden Ansprüche,
**dadurch gekennzeichnet, dass** die Steuereinheit (16) ausgebildet ist, die Anzeigeeinheit (15) zum Anzeigen der Soll-Arbeitsposition (P₂) anzusteuern, wenn die Ist-Arbeitsposition (P₁) von der Soll-Arbeitsposition (P₂) abweicht.

7. System nach einem der vorstehenden Ansprüche,
**dadurch gekennzeichnet, dass** die Sensoreinheit (14) eine Vielzahl von Abstandssensoren zum Erfassen des Arbeitsbereichs aufweist.

8. System nach Anspruch 7,
**dadurch gekennzeichnet, dass** die Abstandssensoren entlang eines Umfangs der Sensoreinheit (14) mit gleichen Abständen zueinander angeordnet sind.

9. System nach Anspruch 7 oder 8,
**dadurch gekennzeichnet, dass** sich die von benachbarten Abstandssensoren erfassten Teilbereiche des Arbeitsbereichs teilweise überlappen.

10. System nach einem der vorstehenden Ansprüche,
**dadurch gekennzeichnet, dass** die Steuereinheit (16) ausgebildet ist, die Anzeigeeinheit (15) zum Ankündigen einer nachfolgenden Bewegungsrichtung des Roboters anzusteuern.

11. System nach einem der vorstehenden Ansprüche,
**dadurch gekennzeichnet, dass** die Anzeigeeinheit (15) eine räumlich aufgelöste Anzeige ist und insbesondere eine Vielzahl von individuell ansteuerbaren LEDs aufweist.

12. System nach einem der vorstehenden Ansprüche,
**dadurch gekennzeichnet, dass** die Anzeigeeinheit (15) mehrere, insbesondere parallel zueinander angeordnete, Anzeigeelemente aufweist, die zur Anzeige an unterschiedlichen Positionen in einer Erstreckungsrichtung des Arms (11) zueinander beabstandet sind.

13. System nach einem der vorstehenden Ansprüche,
**gekennzeichnet durch** ein Gehäuse (13), das sowohl die Sensoreinheit (14) als auch die Anzeigeeinheit (15) aufnimmt.

14. System nach einem der vorstehenden Ansprüche,
**dadurch gekennzeichnet, dass** die Anzeigeeinheit (15) zur Anzeige in unterschiedlichen Farben ausgebildet ist, wobei den Farben unterschiedliche Anzeigeformen wie Warnungen oder Ankündigen zugeordnet sind.
